# EUROPÄISCHE PATENTANMELDUNG

(11) **EP 0 918 268 A2**
(43) Veröffentlichungstag der Anmeldung: **26.05.1999**
(21) Anmeldenummer: 98122077.5
(22) Anmeldetag: 21.11.1998
(51) Int. Cl.: G05B 19/42, B28B 7/34

(54) **Verfahren zur Herstellung von Lithophanien**

(30) Priorität: 24.11.1997 DE 19751966
(71) Anmelder: Kragl, Dieter, 27753 Delmenhorst (DE)
(72) Erfinder: Kragl, Dieter, 27753 Delmenhorst (DE); Merz, Carsten, 60489 Frankfurt/M. (DE)
(74) Vertreter: Möller, Friedrich, Dipl.-Ing.

(57) **Zusammenfassung**

Die Erfindung betrifft ein Verfahren zur Herstellung von Lithophanien.

Zur Herstellung von Lithophanien werden bisher auf kunshandwerkliche Weise Formen erstellt. Diese manuelle Fertigung ist sehr zeitaufwendig, vom Geschick des Handwerkers abhängig und weist Grenzen hinsichtlich der Fertigungsgenauigkeit auf. Das neue Herstellungsverfahren soll eine einfache, prizise Herstellung von Lithophanien ermöglichen.

Hierzu wird eine zwei- oder dreidimensionale Vorlage des durch die Lithophanie erzeugten Bildes automatisiert erfaßt und eine reliefartige Oberfläche aus den Informationen der Vorlage bestimmt. Die Kontur der reliefartigen Oberfläche kann automatisiert in die Form eingebracht werden.

Das Verfahren ermöglicht die automatisierte Fertigung von Lithophanien unter Verwendung einer zwei- oder dreidimensionalen Vorlage.

## Beschreibung

Die Erfindung betrifft ein Verfahren zur Herstellung von Lithophanien, wobei auf eine Form mit der Kontur der reliefartigen Oberfläche der Lithophanie oder eine von der Form abgenommene Form das Material für die Lithophanie aufgebracht wird.

Als Lithophanien werden dünne Porzellankörper von hoher Transparenz aus beispielsweise unglasiertem Biscuitporzellan bezeichnet, die eine modellierte, reliefartige Oberfläche aufweisen. Bei den Lithophanien kann es sich um ebene, plattenartige Körper oder räumliche, zum Beispiel gewölbte Körper handeln. Durch Beleuchtung der Lithophanie von hinten zeigt sich dem Betrachter ein Bild, welches durch die unterschiedlich starke Absorption des Lichtes durch die unterschiedliche Dicke des Porzellankörpers entsteht.

Zur Herstellung der Lithophanien wird per Hand die Kontur der reliefartigen Oberfläche in einen Wachskörper modelliert. Bei Verwendung eines transparenten Wachskörpers kann während der Modellierung des Wachses mittels einer Lichtquelle die optische Wirkung der Modellierarbeit kontrolliert werden. Der Wachskörper bildet eine Positivform, von der ein Gipsabguß als Negativform erstellt wird. Eine Vielzahl von Lithophanien kann dann durch mehrmaliges Aufbringen des Materials für die Lithophanien, in der Regel eine Porzellanmasse, in die Negativform hergestellt werden. Die so geformte Porzellanmasse wird nach der Trocknung aus der Negativform im sogenannten lederharten Zustand entnommen und gebrannt.

Die kunsthandwerkliche Herstellung der Wachskörper für die Formen ist sehr aufwendig und vom Geschick des Kunsthandwerkers abhängig. Weiterhin sind der Genauigkeit bei der Modellierung des Wachses durch die Materialeigenschaften des Wachses sowie die Handfertigkeiten des Modellierers Grenzen gesetzt.

Der Erfindung liegt daher die Aufgabe zugrunde, ein Verfahren zur vereinfachten Herstellung von hochwertigen Lithophanien zu schaffen.

Zur Lösung dieser Aufgabe ist das erfindungsgemäße Verfahren dadurch gekennzeichnet, daß die reliefartige Oberfläche beschreibende Informationen einer Vorlage automatisiert erfaßt werden und die Kontur der reliefartigen Oberfläche der Form automatisiert gebildet wird. Durch die automatische Erfassung der Information einer zweidimensionalen Vorlage und der automatisierten Fertigung der Form, die eine beliebige Gestalt aufweisen kann, entfällt der zeitaufwendige und kostenintensive kunsthandwerkliche Arbeitsschritt zur Erstellung des als Form dienenden Wachsmodelles. Außerdem ist die Qualität der Lithophanie nicht mehr von den Fähigkeiten des Modellierers abhängig.

In einer bevorzugten Ausgestaltung der Erfindung wird die Kontur der reliefartigen Oberfläche mittels einer Transformation aus Informationen der zweidimensionalen Vorlage bestimmt. Hierzu können die Informationen des zweidimensionalen Bildes von mindestens einem Meßorgan, beispielsweise eine CCD-Kamera oder ein Scannner, erfaßt werden. Informationen des zweidimensionalen Bildes können hierbei Helligkeiten, Farben, Konturen oder Kontrastunterschiede sein. Mittels des Meßorgans kann für Bildpunkte oder Teilflächen des zweidimensionalen Bildes die Information der zweidimensionalen Vorlage quantifiziert werden, nämlich in Informationen für das dreidimensionale Relief umgewandelt werden.

In einer weiteren Ausgestaltung der Erfindung wird das Ausgabesignal des Meßorgans einer Datenverarbeitungsanlage zugeführt. Dieses Ausgabesignal enthält die notwendigen Informationen des dreidimensionalen Reliefs.

In einem besonders vorteilhaften Verfahren wird zur Bestimmung der Kontur der reliefartigen Oberfläche als Information die Helligkeit eines Bildpunktes oder einer Teilfläche des durch das Meßorgan erfaßten Bildes bestimmt und die dem Bildpunkt oder der Teilfläche des zweidimensionalen Bildes zugeordnete Höhe der Kontur der reliefartigen Oberfläche wird dann aus der Mulitplikation des ermittelten Helligkeitswertes mit einem Funktionswert ermittelt. Wird also in einer Teilfläche der zweidimensionalen Vorlage von dem Meßorgan eine mittlere Lichtintensität gemessen, dann wird die Höhe der Kontur der reliefartigen Oberfläche so gewählt werden, daß bei Beleuchtung der Lithophanie das erzeugte Bild im der Teilfläche zugeordneten Bereich ebenfalls eine mittlere Lichtintensität aufweist. Ein geeigneter Funktionswert kann einer Funktion entnommen werden, die das optische Verhalten des Materials für die Lithophanie beschreibt.

Üblicherweise erfolgt bei der Erfassung einer zweidimensionalen Vorlage eine Digitalisierung. Dies hat zur Folge daß für die Kontur reliefartiger Oberflächen nur diskrete Höhenwerte ermittelt werden müssen. Bei einer weiteren Ausgestaltung der Erfindung wird die Kontur der reliefartigen Oberfläche durch eine gekrümmte Fläche gebildet, welche an diskreten Punkten ermittelte Höhen verbindet oder appoximiert.

Die so ermittelte reliefartige Oberfläche kann über eine Fertigungseinrichtung, beispielsweise eine Fräsmaschine, in eine Form, insbesondere eine Positivform, eingebracht werden, die als Form für eine weitere Form - eine Negativform - verwendet wird, in welche das Material für die Lithophanie eingebracht werden kann. Alternativ ist es durch das erfindungsgemäße Verfahren ebenfalls möglich, die reliefartige Oberfläche direkt in eine Negativform einzubringen, so daß ein weiterer Arbeitsschritt eingespart werden kann. Neben der beschriebenen Möglichkeit des substraktiven Verfahrens zur Herstellung der reliefartigen Oberfläche kann diese ebenfalls durch ein Auftragsverfahren, beispielsweise Stereolithographie, erstellt werden. Hierbei wird auf die Oberfläche des Grundkörpers der Form Material unterschiedlicher Höhe aufgetragen.

Bei einem weiteren erfindungsgemäßen Verfahren wird ein lichtempfindliches Medium in den Bereichen unterschiedlicher charakteristischer Informationen der zweidimensionalen Vorlage unterschiedlich belichtet. Durch die unterschiedliche Belichtung des Materials in den den charakteristischen Bereichen zugeordneten Teilvolumina härtet das Material unterschiedlich tief aus. Das gehärtete Materialvolumen weist die Kontur der reliefartigen Oberfläche auf. Die Belichtung des lichtempfindlichen Mediums kann mittels eines Dias erfolgen. Dies hat den Vorteil, daß der Arbeitsschritt des Erfassens der Informationen des zweidimensionalen Bildes entfällt.

In einer weiteren Ausgestaltung der Erfindung wird der Farbe eines Bildpunktes oder einer Teilfläche des durch ein Meßorgan erfaßten Bildes ein Farbwert zugeordnet und die reliefartige Oberfläche der Lithophanie im dem Bildpunkt oder der Teilfläche zugeordneten Bereich entsprechend dem ermittelten Farbwert nachcoloriert. Für jede Teilfläche der Vorlage wird also einerseits die Helligkeit ermittelt, aus der die Höhe der Kontur im zugeordneten Bereich der reliefartigen Oberfläche bestimmt wird. Andererseits wird ebenfalls die Farbe der Teilfläche bestimmt. Die entsprechende Farbe muß dann auf jede Lithophanie im der Teilfläche zugeordneten Bereich der reliefartigen Oberfläche aufgetragen werden. Hierdurch kann die optische Wirkung der Lithophanie verbessert werden.

Weitere Ansprüche betreffen bevorzugte Ausgestaltungen der Erfindung.

Ein bevorzugtes Ausführungsbeispiel des erfindungsgemäßen Verfahrens wird nachfolgend anhand der Zeichnungen näher erläutert. Es zeigen:
- Fig. 1: eine zweidimensionale Vorlage in schematischer Darstellung,
- Fig. 2: ein Signal mit von einem Meßorgan entlang einer Linie erfaßten Informationen,
- Fig. 3: eine reliefartige Oberfläche einer Positivform oder einer Lithophanie,
- Fig. 4: einen Funktionsverlauf der Lichtdurchlässigkeit des Materials für die Lithophanie in Abhängigkeit von der Materialdicke, und

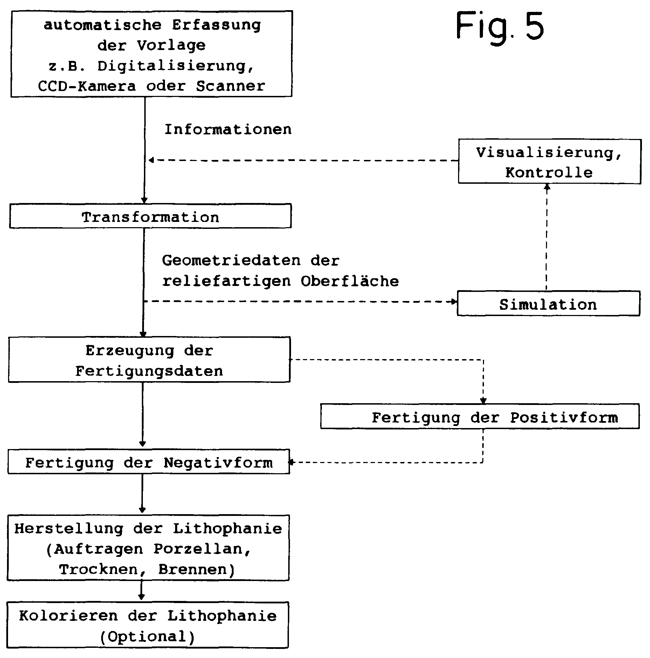

- Fig. 5: ein Ablaufschema des erfindungsgemäßen Verfahrens.

Das Verfahren zur Herstellung einer Lithophanie soll im folgenden auf der Basis einer stark schematisierten zweidimensionalen Vorlage 10 dargestellt werden. Zur Vereinfachung weist die Vorlage 10 einen hellen Hintergrund 11, eine halbdunkle Kreisfläche 12 und ein dunkles Quadrat 13 auf. Die Informationen der Vorlage 10, in diesem einfachen Beispiel die Lage, Form und Helligkeit der Kreisfläche 12 und des Quadrates 13, wird vollautomatisch von einem Meßorgan, beispielsweise einer CCD-Kamera oder einem Scanner, erfaßt. Hierzu kann beispielsweise die Gesamtfläche der Vorlage 10 in einzelne Teilflächen 14 oder Bildpunkte 15 aufgeteilt werden. Jeder Teilfläche 14 oder jedem Bildpunkt 15 ist eine X- und eine Y-Koordinate zugeordnet. Weiterhin kann der Teilfläche 14 oder dem Bildpunkt 15 die Information eines Meßorgans, beispielsweise der CCD-Kamera oder des Scanners, im Bereich der Teilfläche 14 oder des Bildpunktes 15 zugeordnet sein. Üblicherweise werden die Teilflächen 14 und Bildpunkte 15 in den Meßorganen zeilen- und/oder spaltenweise abgetastet, so daß die gesamte Vorlage 10 durch n-Zeilen und/oder m-Spalten erfaßt wird.

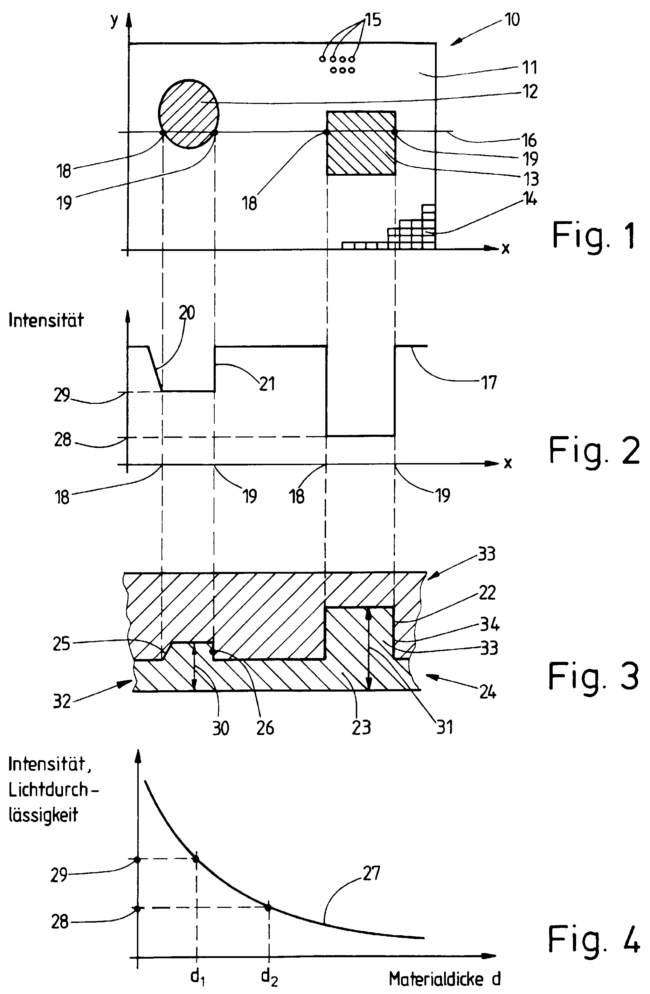

Das entlang der Auswertezeile 16 für Teilflächen 14 oder Bildpunkte 15 mit konstanter y-Koordinate und mit steigender x-Koordinate gemessene Intensitätssignal 17 ist in Fig. 2 dargestellt. Die Auswertezeile 16 durchläuft sowohl die Kreisfläche 12 als auch das Quadrat 13. An den Eintrittspunkten 18 und Austrittspunkten 19 der Teilflächen 14 oder Bildpunkte 15 des Meßorgans ändert sich das Ausgangssignal des Meßorgans. Das Intensitätssignal weist an den Eintrittspunkten 18 und Austrittspunkten 19 aus der Kreisfläche 12 und dem Quadrat 13 einen Anstieg 20 oder einen Sprung 21 auf. Die Information der Vorlage 10, nämlich ein Wechsel der Helligkeit im Bereich der Eintrittspunkte 18 und der Austrittspunkte 19 ist also mit den zugehörigen Koordinaten im Intensitätssignal 17 enthalten.

Beim erfindungsgemäßen Verfahren muß aus dem dargestellten Intensitätssignal 17 die Kontur 22 einer reliefartigen Oberfläche derart bestimmt werden, daß bei Beleuchtung eines lichtdurchlässigen Körpers mit der Kontur 22 der reliefartigen Oberfläche die Informationen der Vorlage auf einer einer Lichtquelle gegenüberliegenden Seite des Körpers wiedergegeben werden. Hierbei macht man sich den physikalischen Effekt zunutze, daß die Lichtdurchlässigkeit eines Materials 23 für die Lithophanie abhängig ist von der Materialdicke. Soll also das optische Verhalten der erstellten Lithophanie 24 den Anstieg 20 oder den Sprung 21 des Intensitätssignals 17, also die Information des Eintrittspunkts 18 oder des Austrittspunkts 19, wiedergeben, so erfolgt dies mittels eines Anstieges 25 oder eines Sprunges 26 der Dicke der Lithophanie 24. Für eine Änderung der Lichtintensität durchgelassenen Lichts infolge eines Sprunges 26 der Dicke der Lithophanie 24 muß bekannt sein, welche Dickenänderung die gewünschte Intensitätsänderung zur Folge hat. Für die Modellierung des optischen Verhaltens kann eine Funktion 27 verwendet werden, die die Lichtdurchlässigkeit oder die Intensität des durchgelassenen Lichtes bei konstanter Beleuchtung in Abhängigkeit von der Materialdicke d beschreibt. Umgekehrt können bei bekannten Intensitätswerten 28 und 29 aus der Funktion 27 die notwendigen Materialdicken d₁ und d₂ der Lithophanie 24, also die Höhen 30 und 31 der reliefartigen Oberfläche, bestimmt werden. Entlang der Auswertezeile 16 kann also über das Intensitätssignal 17 der Verlauf der Kontur 22 der Lithophanie 24 berechnet werden.

Bei der Verwendung eines Scanners oder einer CCD-Kamera als Meßorgan wird die Gesamtfläche mit n Zeilen und jeweils m Teilflächen je Zeile digitalisiert. Dies bedeutet, daß die charakteristischen Merkmale der Vorlage durch m x n diskrete Werte, beispielsweise Intensitätswerte 28, 29, repräsentiert wird. Aus diesen diskreten Intensitätswerten 28, 29 können diskrete Punkte der reliefartigen Oberfläche der Lithophanie 24 oder der Kontur 22 bestimmt werden. Bei der Erfassung einer zweidimensionalen Vorlage 10 durch ein derartiges digitales Meßverfahren kann durch eine geeignete Datenverarbeitung eine gekrümmte Fläche durch die diskreten Punkte 30, 31 gelegt werden.

Bei einem alternativen Verfahren basiert die Ermittlung der Kontur 22 der reliefartigen Oberfläche auf der Spline-Approximation der diskreten Punkte in der x-y-Ebene. Eine derartige Approximation der ermittelten Punkte hat den Vorteil, daß extreme Verläufe des Intensitätssignals 17 bzw. der Kontur 22 der reliefartigen Oberfläche, beispielsweise ein Sprung 21, 26, geglättet werden. Die Glättung vereinfacht die Fertigung der reliefartigen Oberfläche. Beispielsweise können Knicke, Sprünge, schmale Stege oder tiefe Rillen durch die Spline-Approximation vermieden werden.

Die derart ermittelte Kontur einer reliefartigen Oberfläche kann dann über ein geeignetes Fertigungsverfahren, beispielsweise eine Fräsmaschine in eine Positivform 32 beliebiger Gestalt eingebracht werden. Die ermittelten Höhen entsprechen hierbei den Höhen einer oberen Schicht der Positivform 32. Für die Herstellung der Form eignen sich besonders Werkstoffe, die eine feine Oberflächenbearbeitung zur Erzielung einer hohen optischen Qualität der mit dieser Form erstellten Lithophanie 24 ermöglichen. Dabei sollte das Material nicht zu hart sein, um möglichst hohe Standzeiten des Fräswerkzeuges zu ermöglichen. Hierzu geeignete Materialien sind beispielsweise Buntmetalle, insbesondere Aluminium, Kunststoffe oder dergleichen. Von einer derartigen Positivform 32 kann dann eine Negativform 33 aus vorzugsweise Gips abgenommen werden. Auf die Negativform 33 wird das Material der Lithophanie 24 zur Herstellung selbiger aufgetragen.

Innerhalb der Fertigung kann die Erstellung der Positivform 24 eingespart werden, wenn die Kontur 22 der reliefartigen Oberfläche direkt in die Negativform 32 eingebracht wird, die ebenfalls eine beliebige Gestalt aufweisen kann. Erhabene Bereiche 34 der Positivform entsprechen Vertiefungen 35 der Negativform mit gleicher Kontur 22. In diesem Fall muß die Negativform aus einem Material gefertigt werden, welches die maschinelle Fertigung und gleichzeitig das Abformen der Lithophanie 24 ermöglicht.

Eine Veränderung der Form und/oder Größe der reliefartigen Oberfläche der Lithophanie 24 kann durch Manipulation der Daten erfolgen. Dies ist beispielsweise notwendig, wenn die Größe der Lithophanie 24, beispielsweise im Vergleich zur zweidimensionalen Vorlage 10, verändert werden soll. Derartige Veränderungen können auf einfache Weise durch Multiplikation der x- und/oder y-Koordinaten mit einem Stauchungs- und/oder Strekkungsfaktor erfolgen. Weiterhin kann durch einen entsprechenden Faktor das Schrumpfen der Porzellanmasse berücksichtigt werden.

Die Erfassung einer Vorlage 10 durch ein geeignetes Meßorgan erübrigt sich in dem Fall, daß die Vorlage mit einer geeigneten Software digital erzeugt worden ist. In diesem Fall kann direkt von der digitalen Darstellung der Vorlage die Kontur 22 der reliefartigen Oberfläche bestimmt werden.

Neben der Helligkeit der einzelnen Bildpunkte 15 oder der Teilflächen 14 können selbstverständlich auch andere Informationen der Vorlage 10 ausgewertet werden, beispielsweise die Farbe im Bildpunkt 15 oder einer Teilfläche 14 der Vorlage 10. Für die Farbgebung wird auf die reliefartige Oberfläche der Lithophanie 24, beispielsweise mittels einer beweglichen Druckvorrichtung oder mittels mannuellen Auftrags von Farbpartikeln, die der Information der Vorlage 10 entsprechende Farbe auf die Lithophanie 24 aufgetragen. Die so erzeugten farbigen Bereiche der Oberfläche der Lithophanie 24 werden entsprechend der Dicke der Lithophanie 24 in zugeordneten Bereichen mit Licht von unterschiedlicher Helligkeit durchleuchtet, so daß entsprechend der reliefartigen Oberfläche die Helligkeit einer Farbe sehr feinstufig eingestellt werden kann.

Mit dem erfindungsgemäßen Verfahren können Lithophanieplatten erstellt werden. Selbstverständlich ist gleichermaßen die Fertigung von kugeligen, kegeligen, zylindrischen oder anderen Lithophaniekörpern mit einer dreidimensionalen Geometrie möglich. Hierzu wird die geometrische Oberflächenbeschreibung mathematisch auf die gewünschte Oberflächenform projiziert. Weiterhin ist es möglich mit dem beschriebenen Verfahren Kopien von bereits erstellten, alten Lithophanien zu erstellen, deren Originalform nicht mehr verfügbar ist. Hierzu wird die Lithophanie von hinten beleuchtet, das erzeugte Bild, zum beispiel ein Foto, wird vom Meßorgan aufgenommen und digitalisiert. Dann wird das vorstehend beschriebene Verfahren unter Berücksichtigung des Schrumpfens des Materials für die Lithophanie und eventuell andersartige optische Eigenschaften des Kopieporzellanes durch einen Korrekturfaktor angewendet.

Bei der Kopie einer existierenden Lithophanie liegt die Kontur der reliefartigen Oberfläche schon vor. In einer Vereinfachung des Verfahrens kann also die zu kopierende Lithophanie geometrisch mittels eines Meßorganes, beispielsweise ein Taster oder ein Laser, welches über die Oberfläche bewegt wird und die Kontur der Oberfläche erfaßt, abgetastet werden. Die derart ermittelte Kontur der reliefartigen Oberfläche kann dann gemäß dem bereits beschriebenen Verfahren weiterverarbeitet werden, so daß in diesem Fall die Digitalisierung einer zweidimensionalen Vorlage entfällt.

In einer weiteren Ausführung des erfindungsgemäßen Verfahrens kann auf der Basis der bestimmten reliefartigen Oberfläche die optische Wirkung der zu produzierenden Lithophanie simuliert werden. Das Ergebnis der Simulation kann an ein Ausgabegerät, beispielsweise ein Bildschirm oder ein Drucker, übergeben werden. Mittels des Ausgabegerätes ist dann eine Kontrolle der optischen Wirkung der Lithophanie vor der ersten Fertigung möglich. Hierdurch erübrigt sich die kostspielige und zeitraubende Herstellung von Prototypen.

In einer alternativen Ausführung des erfindungsgemäßen Verfahrens kann als Material zur Erstellung der Form ein lichtempfindliches Material verwendet werden, welches nach einer Belichtung (elektromagnetische Bestrahlung aller Art wie z.B. Infrarotlicht, ultraviolettes Licht, Röntgenstrahlen etc.) die Materialeigenschaften derart verändert, daß unbelichtetes und mehr oder weniger belichtetes Material mit oder ohne einen nachfolgenden Entwicklungsprozeß unterschiedlich aushärtet. Ausgehärtetes Material und unzureichend ausgehärtetes Material können in einem folgenden Arbeitsschritt voneinander getrennt werden. Gemäß diesem Verfahren wird zur Herstellung einer Lithophanieform eine Platte oder ein anderer Körper, beispielsweise ein gewölbter, zylindrischer oder in sonstiger Weise ausgebildeter Körper einige Millimeter dick mit einem optisch empfindlichen Material beschichtet (z.B. Fotogelantine). Bei optisch empfindlichen Flüssigkeiten wird eine flache Wanne entsprechend hoch befüllt. Das optisch emfpindliche Material kann nun beispielsweise mit einem Dia der Bildvorlage belichtet werden. Das Licht dringt entsprechend seiner Helligkeit tief in das optisch empfindliche Material ein. Teilvolumina des lichtempfindlichen Materials, in welche Licht ausreichender Intensität tief in das optisch empfindliche Material eindringen, werden entsprechend tief ausgehärtet. In schwach beleuchteten Teilvolumina ist die Tiefe des Aushärtevorganges entsprechend niedriger. Das Abbild des Dias erzeugt somit eine dreidimensionale Belichtung in dem optisch empfindlichen Material. Je nach Eigenschaften des optisch empfindlichen Materials wird ohne oder mit anschließendem Entwicklungsprozeß eine Positivform zum Abguß der Lithophanie hergestellt.

Ein weiteres Verfahren zur Colorierung der reliefartigen Oberfläche der gebrannten Lithophanie besteht darin, daß die Oberfläche mit einer Diapositivfilmemulsion beschichtet wird, dann mittels eines Dias, welches nur die chrominate Information, also die Farbe der Bildvorlage, enthält, belichtet, und anschließend entwickelt.

Die Erfindung eignet sich für alle Arten von Lithophanien, ist also nicht auf plattenartige Lithophanien beschränkt. Insbesondere können die Lithophanien auch beliebig gewölbt sein.

### Bezugszeichenliste:

- 10: Vorlage
- 11: Hintergrund
- 12: Kreisfläche
- 13: Quadrat
- 14: Teilfläche
- 15: Bildpunkt
- 16: Auswertezeile
- 17: Intensitätssignal
- 18: Eintrittspunkt
- 19: Austrittspunkt
- 20: Anstieg
- 21: Sprung
- 22: Kontur
- 23: Material
- 24: Lithophanie, Positivform
- 25: Anstieg
- 26: Sprung
- 27: Funktion
- 28: Intensitätswert
- 29: Intensitätswert
- 30: Höhe
- 31: Höhe
- 32: Positivform
- 33: Negativform
- 34: erhabener Bereich
- 35: Vertiefung

## Patentansprüche

1. Verfahren zur Herstellung von Lithophanien, wobei auf eine Form mit der Kontur der reliefartigen Oberfläche der Lithophanie oder eine von der Form abgenommene Form das Material für die Lithophanie aufgebracht wird, **dadurch gekennzeichnet**, daß die reliefartige Oberfläche beschreibende Informationen einer Vorlage automatisiert erfaßt werden und anhand dieser Informationen die Kontur der reliefartigen Oberfläche der Form automatisiert gebildet wird.

2. Verfahren nach Anspruch 1, dadurch gekennzeichnet, daß die Informationen einer zweidimensionalen Vorlage erfaßt werden.

3. Verfahren nach Anspruch 2, dadurch gekennzeichnet, daß die Kontur der reliefartigen Oberfläche mittels einer Transformation aus Informationen der zweidimensionalen Vorlage bestimmt wird, vorzugsweise die Informationen von mindestens einem Meßorgan, beispielsweise einer CCD-Kamera oder einem Scanner, erfaßt werden.

4. Verfahren nach einem der vorstehenden Ansprüche, dadurch gekennzeichnet, daß das Ausgabesignal des Meßorgans einer Datenverarbeitungsanlage zugeführt wird.

5. Verfahren nach einem der vorstehenden Ansprüche, dadurch gekennzeichnet, daß eine Datenverarbeitungseinheit die Kontur der reliefartigen Oberfläche derart bestimmt, daß bei Beleuchtung eines der reliefartigen Oberfläche zugeordneten Körpers Informationen der Vorlage auf einer der Lichtquelle gegenüberliegenden Seite des Körpers durch schwankende Helligkeiten wiedergeben werden.

6. Verfahren nach einem der vorstehenden Ansprüche, dadurch gekennzeichnet, daß zur Bestimmung der Kontur der reliefartigen Oberfläche als Information die Helligkeit eines Bildpunktes oder einer Teilfläche der durch das Meßorgan erfaßten Vorlage bestimmt wird und die dem Bildpunkt oder der Teilfläche der zweidimensionalen Vorlage zugeordnete Höhe der Kontur der reliefartigen Oberfläche aus der Multiplikation des ermittelten Helligkeitswertes mit einem Funktionswert ermittelt wird.

7. Verfahren nach Anspruch 6, dadurch gekennzeichnet, daß die Kontur der reliefartigen Oberfläche durch eine gekrümmte Fläche gebildet wird, welche an diskreten Punkten ermittelte Höhen verbindet oder approximiert.

8. Verfahren nach einem der vorstehenden Ansprüche, dadurch gekennzeichnet, daß eine Veränderung der Form und/oder Größe der Lithophanie durch eine Änderung der Koordinaten der reliefartigen Oberfläche in einer Datenverarbeitungsanlage erfolgt, beispielsweise durch eine Veränderung des Abstandes benachbarter Bildpunkte.

9. Verfahren nach einem der vorstehenden Anspüche, dadurch gekennzeichnet, daß in einer Datenverarbeitungsanlage das optische Verhalten der Lithophanie mit der ermittelten reliefartigen Oberfläche simuliert wird und das Ergebnis der Simulation einer Ausgabeeinheit zuführt wird.

10. Verfahren nach Anspruch 1, dadurch gekennzeichnet, daß ein lichtempfindliches Medium in den Bereichen unterschiedlicher charakteristischer Informationen der zweidimensionalen Vorlage, beispielsweise eines Dias oder dergleichen, unterschiedlich belichtet wird, durch die unterschiedliche Belichtung das Material in unterschiedlichen Informationen zugeordneten Teilvolumina unterschiedlich tief aushärtet und das gehärtete Materialvolumen die Kontur der reliefartigen Oberfläche aufweist.

11. Verfahren nach einem oder mehreren der vorstehenden Ansprüche, dadurch gekennzeichnet, daß die erstellte Form eine Positivform ist, mittels derer eine Negativform aus beispielsweise Gips erstellt wird, wobei die Lithophanie durch Aufbringen des Materials für die Lithophanie, beispielsweise Porzellan, auf die Negativform erstellt wird.

12. Verfahren nach einem oder mehreren der vorstehenden Ansprüche, dadurch gekennzeichnet, daß die erstellte Form eine Negativform ist und die Lithophanie durch Aufbringen des Lithophaniematerials, beispielsweise Porzellan, auf die Negativform erstellt wird.

13. Verfahren nach einem oder mehreren der vorstehenden Ansprüche, dadurch gekennzeichnet, daß der Farbe eines Bildpunktes oder einer Teilfläche der durch ein Meßorgan erfaßten Vorlage ein Farbwert zugeordnet wird und die reliefartige Oberfläche der Lithophanie im dem Bildpunkt oder der Teilfläche zugeordneten Bereich entsprechend dem ermittelten Farbwert nachkoloriert wird.

14. Verfahren nach einem oder mehreren der vorstehenden Ansprüche, dadurch gekennzeichnet, daß als dreidimensionale Vorlage der Lithophanie eine bereits bestehende Lithophanie verwendet wird, deren Informationen durch Abtasten der reliefartigen Oberfläche mittels eines Meßorgans ermittelt werden.
